# EUROPEAN PATENT SPECIFICATION

(11) **EP 0 315 947 B1**
(45) Date of publication and mention of the grant of the patent: **16.02.1994**
(21) Application number: 88118572.2
(22) Date of filing: 08.11.1988
(51) Int. Cl.: G03G 15/00

(54) **Image-forming machine**
Bilderzeugungsgerät
Appareil de formation d'images

(30) Priority: 10.11.1987 JP 282201/87; 11.11.1987 JP 283078/87; 30.11.1987 JP 300074/87; 30.11.1987 JP 300079/87
(43) Date of publication of application: 17.05.1989
(60) Divisional application: 92118353.9
(73) Proprietor: MITA INDUSTRIAL CO. LTD., Osaka 540 (JP)
(72) Inventor: Koyama, Shigeo, Ibaraki-shi Osaka-fu (JP)
(74) Representative: Popp, Eugen, Dr.

(56) References cited:
- EP-A- 0 201 711
- DE-A- 2 631 115
- DE-A- 2 723 098
- FR-A- 2 603 714
- US-A- 4 204 668
- US-A- 4 751 484
- PATENT ABSTRACTS OF JAPAN, vol. 12, no. 71 (P-673)(2918), 5 March 1988 & JP-A-62 210478

## Description

### Field of the Invention

This invention relates to an image-forming machine such as a laser beam printer.

### Description of the Prior Art

Image-forming machines such as a laser beam printer generally include an image-bearing means such as a rotating drum having a photosensitive material on its surface, an image-forming means for forming a toner image on the surface of the photosensitive material, a transfer means disposed in a transfer zone, a conveying passage for conveying a sheet material such as a recording sheet through the transfer zone, and a receiving section for receiving the sheet materials conveyed through the conveying passage in the stacked state. For example, DE-A-26 31 115 discloses such an apparatus, comprising, in addition to the above, a sorter tray, wherein the sheets are conveyed to the sorter or discharged to an exit tray depending upon the orientation of a rotatable flap.

The conventional image-forming machines, however, have not proved to be entirely satisfactory, and are still desired to be improved in various respects.

Firstly, in an image-forming machine of the type provided with a main body for forming an image on the surface of sheet materials and a sorter for sorting the sheet materials discharged from the main body, the structure of means designed to conduct the sheet materials discharged from the main body selectively to the sorter with their image-bearing sides facing downwardly (so that no page arrangement is required later) is complex.

Secondly, when the machine is out of use, the receiving surface of the receiving section for receiving the sheet materials gathers dust although this phenomenon is not limited to the above type of the image-forming machine.

### Summary of the Invention

It is a first object of this invention is to provide an improved image-forming machine in which sheet materials discharged from the main body of the machine can be conducted selectively to a sorter by means having a relatively simple structure.

A second object of this invention is to provide an improved image-forming machine in which dust adhesion to a receiving section for receiving sheet materials can be prevented.

Other objects of this invention along with its features will become apparent from the following description.

### Brief Description of the Drawings

Figure 1 is a simplified sectional view showing an embodiment of a laser beam printer as one example of the image-forming machine of the invention with an upper cover member at an open position and an auxiliary receiving member at a first position.

Figure 2 is a top plan view showing the laser beam printer of Figure 1 with the upper cover member omitted.

Figure 3 is a simplified sectional view showing the laser beam printer of Figure 1 with its cover member at a closed position and its auxiliary receiving member at a second position.

Figure 4 is a simplified sectional view of a first modified example of the laser beam printer of the embodiment according to the Figs. 1 to 3.

Figure 5 is a simplified sectional view showing a second modified example of the laser beam printer of the embodiment according to the Figs. 1 to 3.

Figures 6-A and 6-B are partial sectional views showing the second modified example of Figure 5 with its upper cover member at the closed position and the open position, respectively.

### Detailed Description of Preferred Embodiments

The invention will be described below in detail with reference to the accompanying drawings.

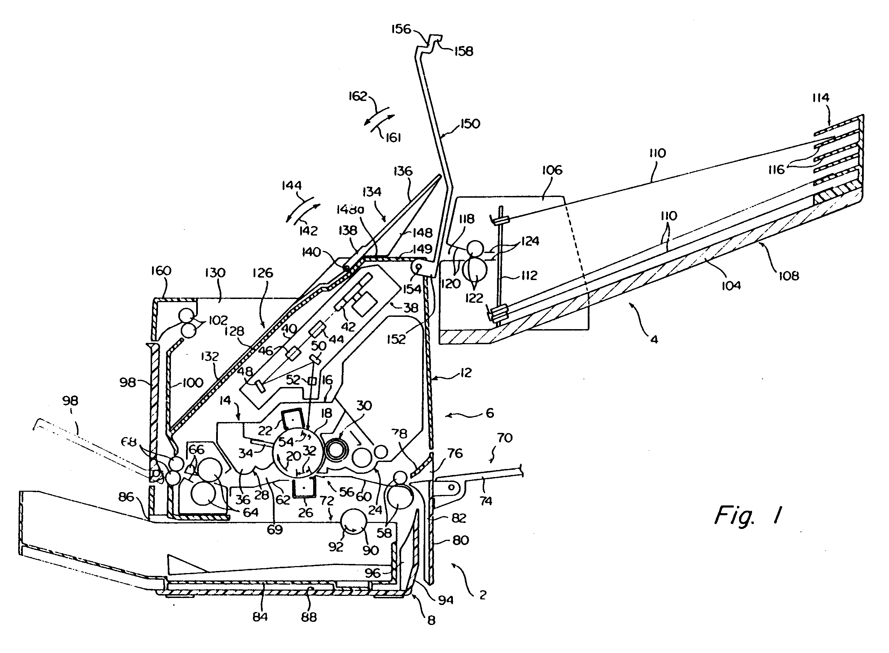

With reference to Figures 1 to 3, an embodiment of a laser beam printer as one example of the image-forming machine of the invention will be described.

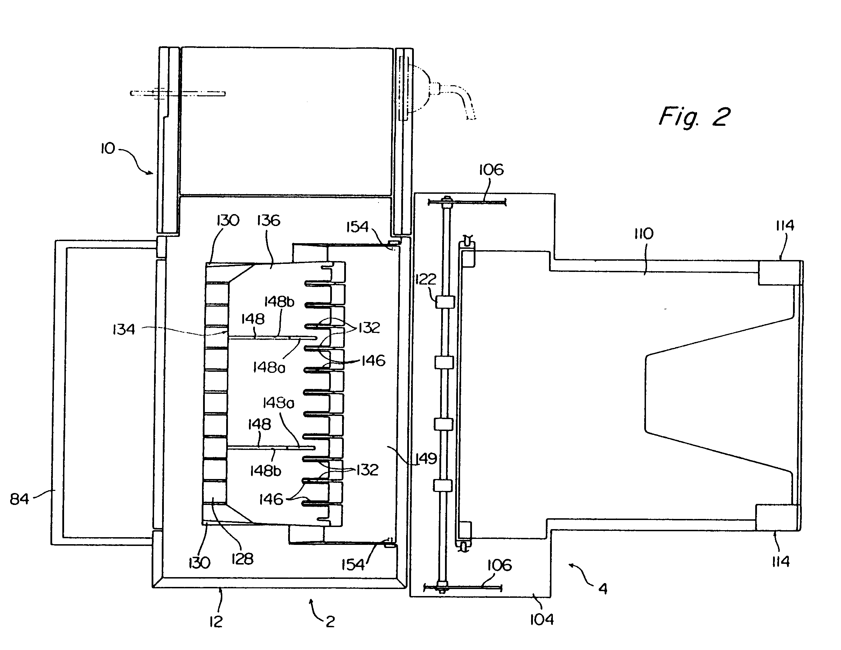

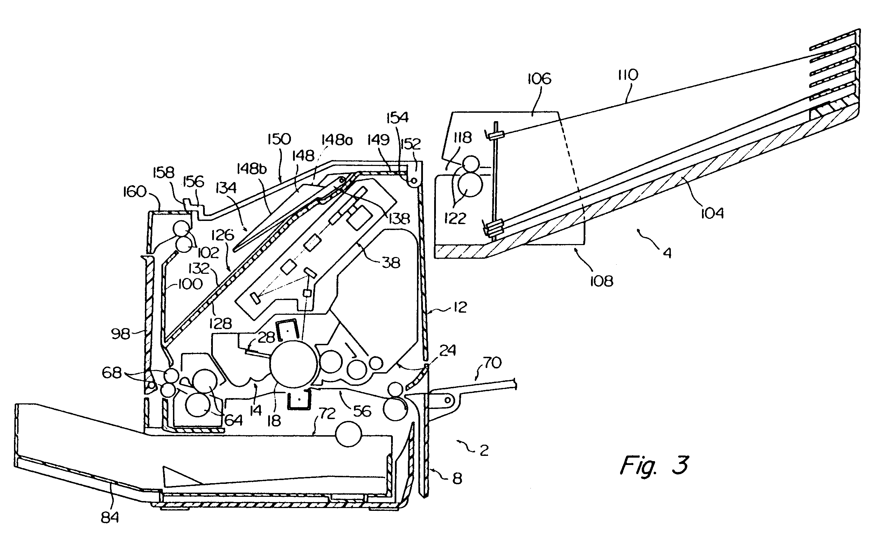

In Figures 1 and 2, the illustrated laser beam printer includes a main body shown generally at 2 and a sorter shown generally at 4, the sorter 4 is adapted to be held at the position shown in Figures 1 and 3 by a supporting mechanism (not shown).

The main body 2 is provided with a rectangular parallelpipedal housing 6 comprised of a lower housing 8, an upper housing 10 and an opening-closing housing 12. The opening-closing housing 12 is mounted on the upper housing 10 so as to be free to pivot between an open position (not shown) and a closed position (shown in Figures 1 to 3).

A process unit 14 is disposed nearly centrally in the housing 6. The illustrated process unit 14 is provided with a unit frame 16 to be detachably mounted on the housing 6, and a rotating drum 18 constituting an image-bearing means is rotatably mounted on the unit frame 16. An electrophotographic sensitive material is disposed on the peripheral surface of the rotating drum 18. Around the rotating drum 18 to be rotated in the direction shown by an arrow 20 are disposed a charging corona discharger 22, a developing device 24, a transfer corona discharger 26 constituting a transfer means and a cleaning device 28. The charging corona discharger 22, the developing device 24 and the cleaning device 28 are mounted on the unit frame 16. The charging corona discharger 22 charges the photosensitive material on the rotating drum 18 to a specific polarity. The developing device 24 is provided with a magnetic brush mechanism 30 and develops a latent electrostatic image formed as described below to a toner image. The transfer corona discharger 26 disposed in a transfer zone 32 applies a corona discharge to the back surface of a sheet material conveyed through a conveying passage as described below. The cleaning device 28 is provided with an elastic blade 34 acting on the surface of the photosensitive material and removes the toner remaining on the surface of the photosensitive material and recovers it in a toner recovery chamber 36.

An optical unit 38 is disposed above the process unit 14 within the housing 6. The optical unit 38 has a box-like unit housing 40, and within the housing 40 are disposed a laser beam source (not shown), a rotating polygon mirror 42 to be moved in a predetermined direction, a first image-forming lens 44, a second image-forming lens 46, a first reflecting mirror 48, a second reflecting mirror 50 and a cylindrical lens 52. The laser beam source (not shown) irradiates a laser beam based on the image information outputted, for example, from a computer toward the rotating polygon mirror 42. As shown by solid lines in Figure 1, the laser beam reflected from the polygon mirror 42 passes through the first image-forming lens 44 and the second image-forming lens 46 and reaches the first reflecting mirror 48. It is reflected by the first reflecting mirror 48 and the second reflecting mirror 50, passes through the cylindrical lens 52 and is projected onto the surface of the rotating drum 18. A conveying mechanism shown generally at 56 is provided below the process unit 14 within the housing 6. The conveying mechanism 56 is provided with a conveyor roller pair 58, a guide plate 60, a guide plate 62, a fixing roller 64, a guide claw 66 and a conveyor roller pair 68 which defines a main portion of a conveying passage 69 for conveying sheet materials such as recording paper. In the illustrated embodiment, the upstream end of the conveying passage 69 is bifurcated. One part extends to the right in a straight line, and a hand-insertion feed means 70 is disposed at its upstream end. The other part is curved and extends downwardly, and an automatic feed means 72 is disposed at its upstream end (more specifically, below the conveying mechanism 56 and at the bottom part of the housing 6). The hand-insertion feed means 70 is provided with a table 74 which is free to pivot between a feed position shown in Figure 1 and a storage position (not shown) displaced upwardly. When the hand-insertion feed means 70 is to be used, the table 74 is held at the feed position. When a sheet material is positioned on the table 74 and inserted through an opening 76 formed in the right wall surface of the housing 6, the sheet material is conducted to the conveying roller pair 58 past the space between the undersurface of a guide plate 78 and the upper end edge of a guide protrusion 82 provided on the inside surface of the wall 80 of the lower housing 8. The illustrated automatic feed means 72 is provided with a cassette 84 in which sheet materials are loaded in the stacked state. The cassette 84 is detachably loaded into a cassette receiving section 88 defined in the bottom part of the housing 6 through an opening 86 formed in the left wall surface of the lower housing 8. A feed roller 90 is disposed above the cassette receiving section 88. Accordingly, when the feed roller 90 is rotated in the direction shown by an arrow 92, the sheet materials are delivered one by one from the cassette 84. The delivered sheet material is guided by a guide protrusion 96 provided in an upstanding wall 94 in the lower housing 6 and the guide protrusion 82 provided in the wall 80, and conducted to the conveyor roller pair 58.

The downstream end portion of the conveying passage is bifurcated. In this regard, an opening-closing cover 98 constituting part of the opening-closing housing 12 is mounted so as to be free to pivot between a first position shown by a solid line in Figure 1 and a second position shown by a two-dot chain line in Figure 1. When the opening-closing cover 98 is at the first position, the sheet material fed by the conveyor roller pair 68 is further conveyed upwardly and conducted to a discharge roller pair 102 through the space between the opening-closing cover 98 and a wall 100 of the opening-closing housing 12, and is discharged out of the housing 6 by the action of the discharge roller pair 102. On the other hand, when the opening-closing cover 98 is at the second position, the sheet material fed by the conveyor roller pair 68 is directly discharged out of the housing 6 without being conveyed upwardly and received on the inside surface (the upper surface in the state shown by the two-dot chain line) of the cover 98.

The illustrated sorter 4 is provided with a supporting frame 108 comprised of a bottom wall 104 and a pair of side walls (Figure 2) extending upwardly from the bottom wall 104. A plurality of vertically spaced bin trays 110 are disposed between the pair of side walls 106, and one end portions (the left end portions in Figures 1 and 2) of each of the bin trays 110 is vertically movably supported by a supporting post 112, and the other end portion (the right end portion in Figures 1 and 2) of each of the bin trays 110 is supported by each of supporting protrusions 116 of a supporting member 114. An elevating-lowering mechanism (not shown) is further disposed on one side of the bin trays 110, and successively moves one end portions of the bin trays 110 upwardly or downwardly successively. The left surface, in Figures 1 and 2, of the sorter 4 has defined therein an introduction opening 118. A sheet material introduced as will be described below through the introduction opening 118 passes through an introduction passage defined by a guide plate pair 120, an introduction roller pair 122 and a guide plate pair 124 and is received in one of the bin trays 110.

With reference to Figure 1, the operation of the image-forming machine described above is briefly stated below.

While the rotating drum 18 is rotated in the direction of arrow 20, the charging corona discharger 22 charges the photosensitive material of the rotating drum 18, and then in the projecting zone 54, a laser beam having a certain piece of image information from the laser beam source (not shown) of the optical unit 38 is projected onto the photosensitive material to form a latent electrostatic image corresponding to the image information on the surface of the photosensitive material. Thereafter, the magnetic brush mechanism 30 of the developing device 24 applies a toner to the latent electrostatic image on the photosensitive material to develop it to a toner image. Thus, by the action of the image-forming machine comprised of the charging corona discharger 22, the optical unit 38 and the developing device 24, a toner image is formed on the rotating drum 18. Then, a sheet material fed from the hand-insertion feed means 70 or the automatic feed means 72 is brought into contact with the photosensitive material in the transfer zone 32 to transfer the toner image from the photosensitive material to the sheet material. The sheet material bearing the toner image is peeled from to rotating drum 18 and conveyed to the fixing roller pair 64. By the action of the fixing roller pair 64, the toner image is fixed to the surface of the sheet material. The sheet material bearing the fixed toner image is conveyed by the conveyor roller pair 68, and when the opening-closing cover 98 is at the second position, directly discharged onto the cover 98. As can be seen from Figure 1, the discharged sheet material has the image-bearing surface turned upwardly. In contrast, when the cover 98 is at the first position, the sheet material conveyed by the conveying roller pair 68 is further conveyed upwardly between the cover 98 and the wall 100, and by the action of the discharge roller pair 102, discharged toward the receiving section 126 provided in the opening-closing housing 12. In this case, the discharged sheet material has the image-bearing surface turned downwardly. The sheet material discharged from the discharge roller pair 102 is received by the receiving section 126 of the housing 12 or is introduced into the introduction passage through the introduction opening 118 of the sorter 4. Meanwhile, the rotating drum 18 continues to rotate, and by the action of the cleaning device 28, the toner remaining on the photosensitive material is removed.

With reference to Figure 3 as well as Figures 1 and 2, the receiving section 126 provided in the opening-closing housing 12 and elements relating to it will be described.

In the illustrated embodiment, the receiving section 126 is defined by the upwardly extending wall 100, an inclined upper wall 128 extending upwardly inclinedly to the right in Figures 1 to 3 and nearly triangular walls 130 on both sides of the inclined upper wall 128. The receiving surface defined by the upper surface of the inclined upper wall 128 extends in a straight line upwardly inclinedly at an angle of about 45 degrees from one end portion (the left end portion in Figures 1 to 3) of the main body 2 to its other end portion (the right end portion in Figures 1 to 3). A plurality of vertically spaced protrusions 132 extending in the direction perpendicular to the sheet surface in Figures 1 to 3 are provided integrally on the upper surface of the inclined upper wall 128.

An auxiliary receiving member 134 is disposed on the upper end portion of the receiving section 126, namely on the upper end portion of the inclined upper wall 128. The illustrated auxiliary receiving member 134 is constructed of a plate-like member 136, and supporting projections 138 (only one of which is shown in Figures 1 and 3) provided in both ends of the plate-like member 136 are mounted on the upper end portion of the inclined upper wall 128 via pins 140 in such a manner as to be free to rotate in the directions shown by arrows 142 and 144 (Figure 1). In the illustrated embodiment, as shown in Figure 2, a plurality of elongate cuts 146 are formed in the base portion of the plate-like member 136 corresponding to the protrusions 132 on the inclined upper wall 128. A pair of triangular supporting and guiding protrusions 148, spaced from each other in the direction perpendicular to the sheet surface in Figures 1 and 3 and in the vertical direction in Figure 2, are provided in the right surface in Figures 1 and 3 of the plate-like member 136. The auxiliary receiving member 134 of the above structure is free to pivot between a first position shown in Figure 1 and a second position shown in Figures 2 and 3. When the auxiliary receiving member 134 is pivoted to the first position, the supporting surfaces 148a of the pair of supporting and guiding protrusions 148 abut with the upper wall 149 of the housing 12 to hamper accurately the pivoting movement of the auxiliary receiving member 134 in the direction shown by an arrow 142 beyond the first position. When the auxiliary receiving member 134 is pivoted to the second position, the bottom portions of cuts 146 formed in the plate-like member 136 abut with the protrusions 132 of the inclined upper wall 128 to hamper accurately the pivoting movement of the auxiliary receiving member 134 in the direction shown by an arrow 144 beyond the second position. At the first position, the auxiliary receiving member 134 is positioned downstream of the receiving section 126 in the sheet material discharging direction and its one surface (the left surface in Figure 10) extends further from the other end of the upper surface of the inclined upper wall 128 to the right in Figure 1 upwardly inclined in a straight line. At the second position, the auxiliary receiving member 134 is positioned above the other end portion of the receiving portion 126, and its other surface, particularly the guide surfaces 148b of the supporting and guiding protrusions 148 are located above the inclined upper wall 128 and extend upwardly inclined in a straight line to the right in Figure 3.

An upper cover member 150 (omitted in Figure 2) for covering the receiving section 126 is attached to the opening-closing housing 12. The upper cover member 150 is plate-like, and is bent slightly at its central part in the left-right direction in Figure 3. Protruding portions 152 are provided at both ends of the base portion of the upper cover member 150, and a stop portion 156 is provided in the free end portion of the upper cover member 150. The protruding portions 152 are rotatably mounted to the opening-closing housing 12 via pins 154. A gripping protrusion 158 is further provided at the end of the stop portion 156. With this arrangement, the upper cover member 150 can be easily pivoted in the directions shown by arrows 161 and 162 (Figure 1) by holding the gripping protrusion 158. When the upper cover member 150 is pivoted in the direction of arrow 161 and held at an open position shown in Figure 1, the overhead space of the receiving section 126 is open to view. Thus, the upper surface of the upper cover member 150 abuts with part of the sorter 4, and consequently, the upper cover member 150 is accurately prevented from pivoting further beyond the open position in the direction of arrow 161. When the upper cover member 150 is pivoted in the direction of arrow 162 and held at a closed position shown in Figure 3, the overhead space of the receiving section 126 is covered and the receiving section 126 is not exposed to view. Thus, the stop portion 156 of the upper cover member 150 abuts with the wall 160 of the opening-closing housing 12. As a result, the upper cover member 150 is accurately prevented from pivoting further beyond the closed position in the direction of arrow 162.

In the image-forming machine described above, at the time of conducting the sheet material discharged from the discharge roller pair 102 to the sorter 4, the auxiliary receiving member 134 is held at the second position and the upper cover member 150, at the closed position. In this state, the guide surfaces 148b of the supporting and guiding protrusions 148 of the auxiliary receiving member 134 extends upwardly inclined toward the upper wall 149 in the housing 12. The upper cover member 150 extends nearly horizontally from the wall 160 to the other end of the main body 2 above the auxiliary receiving member 134. Accordingly, the sheet material discharged from the discharge roller pair 102 is conducted to the introduction opening 118 of the sorter 4 between the auxiliary receiving member 134 and the upper cover member 150 from one end portion of the main body 2 of the machine toward the other end. In other words, the sheet material is fed into the sorter 4 through a passage whose under side is defined by the aforesaid other surface of the auxiliary receiving member 134 (more specifically the guiding surfaces 148b of the supporting guiding protrusions 148) and the upper surface of the upper wall 149 and whose upper side is defined by the under surface of the upper cover member 150. Accordingly, at this time, the auxiliary receiving member 134 acts as a lower guiding means for conducting the sheet material to the sorter 4, and the upper cover material 150 serves as an upper guiding means for conducting the sheet material to the sorter 4. In this state, the sheet material is conveyed nearly horizontally and conducted to the introduction roller pair 122 through the introduction opening 118 of the sorter 4. To further ensure the above conveying of the sheet material, more supporting and guiding protrusions 148 may be provided on the other surface of the auxiliary receiving member 134. Furthermore, in the state shown in Figure 3, the auxiliary receiving member 134 is stored in place in the receiving section 126, and the upper cover member 150 covers the overhead space of the receiving portion 126. Accordingly, the main body 2 of the machine becomes compact and the adhesion of dust to the receiving section 126 can be effectively prevented.

On the other hand, in receiving the sheet material discharged from the discharge roller pair 102 in the receiving section 126, the upper cover member 150 is held at the open position, and the auxiliary receiving member 134 at the first position, as shown in Figure 1. When the upper cover member 150 is pivoted in the direction of arrow 161 and held at the open position, the base portion of the upper cover member 150 covers the introduction opening 118 defined in the sorter 4 to hamper introduction of the sheet material through the opening 118. When the upper cover member 150 is held at the open position, the overhead space of the receiving section 126 is open to view to put the auxiliary receiving member 134 in condition for positioning at the first position. When thereafter the auxiliary receiving member 134 is pivoted in the direction of arrow 142 and held at the first position, the plate-like member 136 of the auxiliary receiving member 134 extends further upwardly from the upper end of the inclined upper wall 128 in an inclined fashion and its upper surface defines a receiving surface for receiving the sheet material in cooperation with the upper surface of the inclined upper surface 128 (the state shown in Figure 1). Accordingly, the sheet material discharged from the discharge roller pair 102 abuts with the receiving surface of the receiving section 126, moves upwardly along the receiving surface, and is received onto the receiving surface. Then the sheet material discharged into the receiving section 126 in the manner described above moves downwardly along the receiving section 126, and its trailing end abuts with the wall 100. The sheet materials so received are arranged at the trailing ends and thus received in place in the receiving section 126 in the stacked state. At this time, the auxiliary receiving member 134 functions as an auxiliary receiving section downstream of the inclined upper wall 128, and its one surface, in cooperation with the upper surface of the inclined upper wall 128, defines a receiving surface. Thus, sheet materials of relatively large length can be received in place in the receiving section 126.

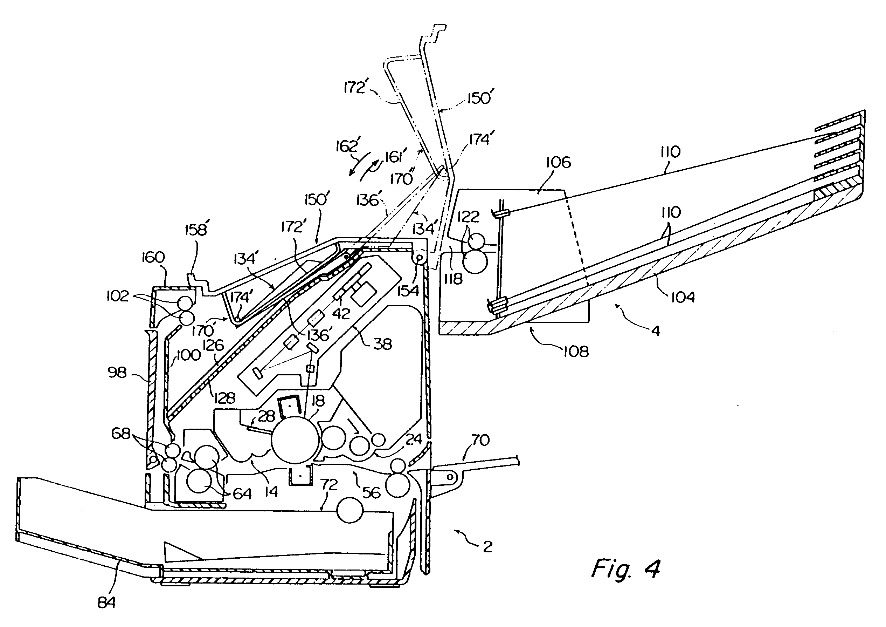

Figure 4 shows a first modified example of the laser beam printer of the embodiment according to the Figs. 1 to 3.

In this modified example, an interlocking mechanism is interposed between the upper cover member and the auxiliary receiving section so that pivoting of the upper cover member also causes the pivoting of the auxiliary receiving section. For convenience of the description, the same members (except for the auxiliary receiving section and the upper cover member) as the members shown in Figures 1 to 3 are designated by the same reference numerals.

In Figure 4, the interlocking mechanism 170' interposed between the auxiliary receiving section 134' and the upper cover member 150' includes an arm member 172' provided in the inner surface of the upper cover member 150' and an interlocking pin 174' provided in the auxiliary receiving section 134'. The arm member 172' is disposed at one side end of the upper cover member 150' with its one end connected to the free end portion of the upper cover member 150' and its other end connected to the base portion of the upper cover member 150'. An opening is defined between the upper cover member 150' and the arm member 172'. The interlocking pin 174' is provided at the free end portion of the plate-like member 136', and its front end portion projecting outwardly from its one side edge is positioned in the opening defined by the upper cover member 150' and the arm member 172'. The interlocking mechanism 170' may, if desired, be disposed at the other side end of the upper cover member 150', or at both side ends of the upper cover member 150'. Otherwise, the structure of the first modified example is substantially the same as that of the first embodiment shown in Figures 1 to 3.

When the gripping protrusion 158' of the upper cover member 150' in the first modified example is held and pivoted from the closed position shown by a solid line in Figure 4 to the open position shown by a two-dot chain line in Figure 4 in the direction of arrow 161', the auxiliary receiving member 134' is pivoted from the second position shown by a solid line in Figure 4 to the first position shown by a two-dot chain line in Figure 4 by the action of the interlocking mechanism 170'. Specifically, when the upper cover member 150' is pivoted in the direction of arrow 161', its pivoting movement causes the arm member 172' to lift the interlocking pin 174', and the interlocking pin 174' is moved relatively from one end portion to the other end portion of the arm member 172'. When the upper cover member 150' is moved to the open position, the interlocking pin 174' is positioned at an end portion of the opening on the base portion side as shown by the two-dot chain line in Figure 4, and the auxiliary receiving member 134' is held at the first position. Accordingly, the sheet material discharged from the discharge roller pair 102 may be received in the receiving section 126 by pivoting the upper cover member 150' and holding it at the open position. As a result, the auxiliary receiving section 134' can be held at the first position via the interlocking mechanism 170'.

When conversely the upper cover member 150' is pivoted from the open position to the closed position in the direction of arrow 162', the auxiliary receiving member 134' is pivoted from the first position to the second position by the action of the interlocking mechanism 170'. Specifically, when the upper cover member 150' is pivoted in the direction of arrow 162', its under surface acts on the interlocking pin 174' to move the interlocking pin 174' relatively from the base portion of the upper cover member 150' toward its free end portion. When the upper cover member 150' is moved to the closed position, the interlocking pin 174' is positioned at an end portion of the opening on the free end portion side, and the auxiliary receiving member 134' is held at the second position, as shown by a solid line in Figure 4. Accordingly, the sheet material discharged from the discharge roller pair 102 may be conducted to the sorter 4 by pivoting the upper cover member 150' and holding it at the closed position. As a result, the auxiliary receiving member 134' can be held at the second position via the interlocking mechanism 170'.

Accordingly, the first modified example of the first embodiment achieves the same operation and result as the first embodiment. Moreover, the upper cover member 150' and the auxiliary receiving member 134' can be held easily at the required positions by a simple operation.

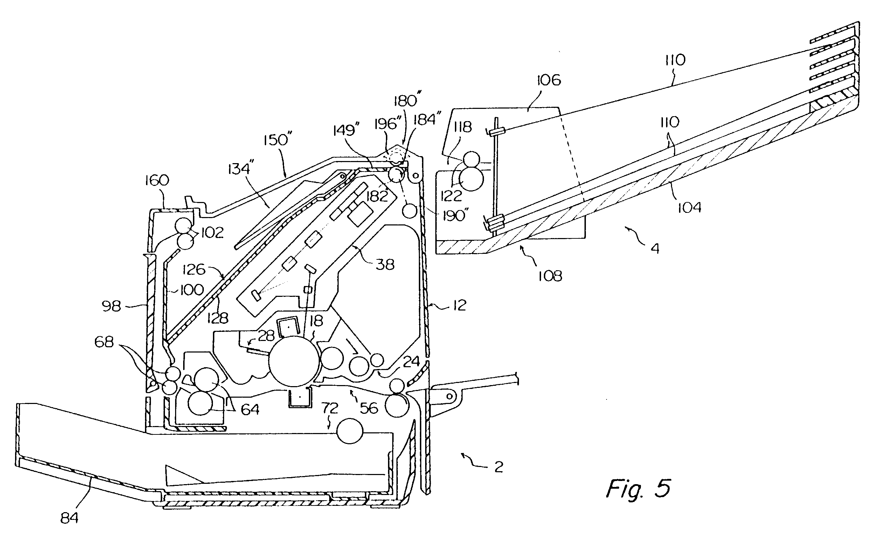

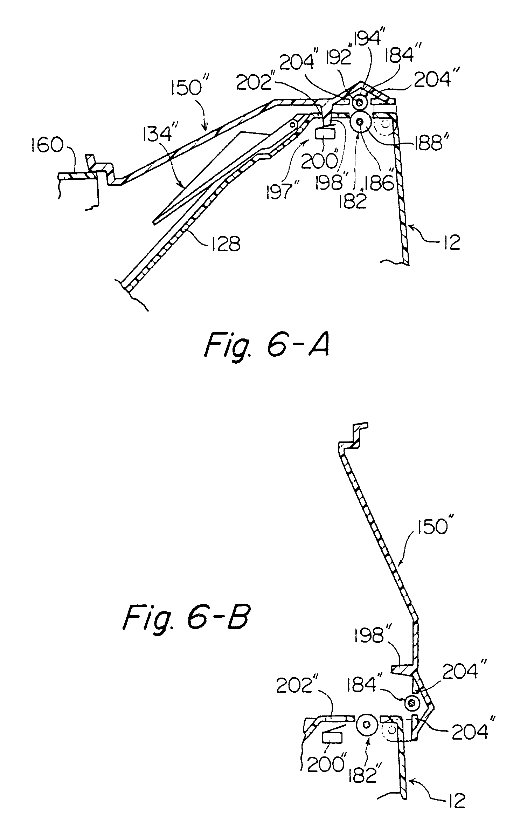

Figures 5, 6-A and 6-B show a second modified example of the laser beam printer of the embodiment according to the Figs. 1 to 3.

In the second modified example, a feed roller mechanism is disposed at that site of the opening-closing housing which is opposite to the site of providing the discharge roller pair in order to permit use of relatively short sheet materials.

In the second modified example as shown in Figure 5, the discharge roller pair 102 is disposed at the left top part in Figure 5 of the housing 12 at one end portion of the main body 2. A sheet material discharged from the discharge roller pair 102 is introduced into the introduction opening 118 defined in the sorter 4 past the upper surface of the upper wall 149'' of the housing 12 of the main body 2. The feed roller mechanism shown at 180'' is disposed at the other end portion of the main body 2 of the machine.

The illustrated feed roller mechanism 180'' comprises a driving roller 182'' disposed in the right upper end portion in Figure 5 of the opening-closing housing 12 and a follower roller 184'' disposed at the base portion of the upper cover member 150''. As shown in Figures 6-A and 6-B, the driving roller 182'' is provided with a rotating shaft 186'' and rollers 188'' mounted on the rotating shaft 186'' in an axially spaced-apart relationship, and the rotating shaft 186'' is rotatably mounted between a pair of supporting walls (not shown). A clutch means 190'' (Figure 5) such as an electromagnetic clutch is also provided on the rotating shaft 186'', and the rotating shaft 186'' is drivingly connected to a main driving source such as an electric motor (not shown; the main driving source for the main body 2 of the machine for actuating the rotating drum 18, the conveying mechanism 56, etc. ) via the clutch mechanism 190''. Hence, when the main driving source (not shown) is energized to set the clutch means 190'' in operation, the driving roller 182'' is rotated in the direction shown by the arrow. As shown, the rollers 188'' on the driving roller 182'' project slightly upwardly through an opening formed in the upper wall 149'' of the opening-closing housing 12. As shown in Figures 6-A and 6-B, the follower roller 184'' is provided with a follower shaft 192'' and rollers 194'' mounted on the follower shaft 192'' in an axially spaced-apart relationship, and both end portions of the follower shaft 192'' are rotatably supported by supporting protrusions 196'' (only one of which is shown in Figure 5) provided at both side ends of the upper cover member 150''. As the follower roller 184'' is so mounted, the base portion of the upper cover member 150'' projects slightly upwardly in a triangular shape, and the follower roller 184'' is disposed in the space formed as a result of this projecting of the base portion of the upper cover member 150''. With this structure, when the upper cover member 150'' is at the closed position shown in Figure 6-A (the position also shown in Figure 5), the follower roller 184'' is positioned above the driving roller 182'' and cooperates with it. The feed roller mechanism 180'' is therefore is in the feed state. On the other hand, when the upper cover member 150'' is held at the open position shown in Figure 6-B, the follower roller 184'' moves away upwardly from the driving roller 182'', and the follower roller 184'' is spaced from the driving roller 182''. The feed roller mechanism 180'' is thus in the non-feed state.

In the second modified example, a closed position detecting means 197'' is provided for detecting the upper cover member 150'' at the closed position (see Figures 6-A and 6-B). The detecting means 197'' includes an actuating piece 198'' provided in the upper cover member 150'' and a switch means 200'' disposed within the housing 12. When the upper cover member 150'' is at the open position, the actuating piece 198'' is positioned above the switch means 200'' and does not act on a detecting arm of the switch means 200'', as shown in Figure 6-B. Thus, the switch means 200'' is open (off). On the other hand, when the upper cover member 150'' is pivoted and held at the closed position, the actuating piece 198'' presses the detecting arm of the switch means 200'' through an opening 202'' formed in the upper wall 149'' to keep the switch means 200'' closed (on).

With regard to the closed position detecting means 197'', the second modified example is further constructed as follows. When the detecting means 197'' is detecting the closed position of the upper cover member 150'' (the switch means 200'' is closed), the clutch means 190'' (Figure 5) is adapted to be energized on the basis of a detection signal outputted from the switch means 200''. Accordingly, when a start switch (not shown) for starting the image-forming process is depressed in this state, the main driving source (not shown) and the clutch means 190'' are energized to rotate the driving roller 182'' in the direction of the arrow via the clutch means 190'' and cause the follower roller 184'' to follow the rotation of the driving roller 182''. Accordingly, when the sheet material discharged from the discharge roller pair 102'' to the feed roller mechanism 180'' after passing between the auxiliary receiving member 134'' at the second position and the upper cover member 150'' at the closed position, it is further conveyed by the action of the driving roller 182'' and the follower roller 184'' and conducted to the introduction opening 118 of the sorter 4. To ensure accurate feeding of the sheet material, it is preferable to provide a guiding protrusion 204'' extending toward the rollers 194'' on the follower roller 184'', as shown in Figures 6-A and 6-B. In contrast, when the closed position detecting means 197'' is not detecting the closed position of the upper cover member 150 (the switch means 200'' is in the open state), the clutch means 190'' is kept from being energized on the basis of a signal outputted from the switch means 200''. Accordingly, even when the start switch (not shown) is depressed in this state, the main driving source (not shown) is energized but the clutch means 190'' is not energized. As a result, the driving roller 182'' and the follower roller 184'' are not rotated, and sufficient safety is ensured.

Otherwise, the structure of the second modified example is substantially the same as that of the embodiment shown in Figures 1 and 3. The second modified example achieves the same results as the first embodiment. In addition, even relatively short sheet materials can be fed to the sorter 4 exactly by the action of the feed roller mechanism 180''.

## Claims

1. An image-forming machine comprising a main body (2) having a conveying passage (69) for conveying a sheet material and a receiving section (126) for receiving a sheet material having an image formed thereon during conveyance through the conveying passage (69), and a sorter (4) having a plurality of bin trays (110) for sorting sheet materials and distributing them among the bin trays (110), said sheet materials being discharged from the conveying passage (69) and selectively introduced into the sorter (4), wherein an auxiliary receiving member (134, 134') is mounted on the receiving section (126) so as to be free to pivot between a first position and a second position, and
the auxiliary receiving member (134, 134') when it is in the first position one of its surfaces acts as an auxiliary receiving portion for receiving the sheet materials discharged from the conveying passage (69), and when it is in the second position its other surface acts as a lower guide means (148) for conducting the sheet materials discharged from the conveying passage (69) to the sorter (4).

2. The image-forming machine of claim 1 in which the receiving section (126) is defined by part of an upper wall (128) of the main body (2) and extends inclinedly upwardly from one end toward the other of the main body (2); and the auxiliary receiving member (134, 134') is disposed in the other end portion of the main body (2), and when it is at the first position, is positioned downstream of the receiving section (126) and acts as an auxiliary receiving portion for receiving the sheet materials discharged from the conveying passage (69), and when it is at the second position, it is positioned above the receiving section (126) and acts as a lower guide means for conducting the sheet materials discharged from the conveying passage (69) to the sorter (4).

3. The image-forming machine of claim 1 in which an upper cover member (150, 150', 150'') is mounted on the main body (2) so as to be free to pivot between an open position and a closed position, and at the open position, keeps the overhead space of the main body (2) open and permits positioning of the auxiliary receiving member (134, 134', 134'') at the first position, and at the closed position, covers the overhead space of the main body (2) and acts as an upper guide means for conducting the sheet materials discharged from the conveying passage (69) to the sorter (4).

4. The image-forming machine of claim 3 in which the upper cover (150, 150', 150'') has provided therein a stop portion (156) which abuts with part (160) of the main body (2) to hamper pivoting movement of the upper cover member (150, 150', 150'') beyond the closed position.

5. The image-forming machine of claim 3 in which the auxiliary receiving member (134') is linked to the upper cover member (150') via an interlocking mechanism (170'); and when the upper cover member (150') is brought to the open position, the auxiliary receiving member (134') is held at the first position by the action of the interlocking mechanism (170'), and when the upper cover member (150') is brought to the closed position, the auxiliary receiving member (134') is held at the second position by the action of the interlocking mechanism (170').

6. The image-forming machine of claim 3 in which a feed roller mechanism (180'') for feeding the sheet materials discharged from the conveying passage (69) to the sorter (4) is disposed at the other end portion of the main body (2), and the feed roller mechanism (180'') is provided with a driving roller (182'') mounted on the main body (2) and adapted to rotate in a predetermined direction and a follower roller (184'') mounted rotatably on the upper cover member (150'') and adapted to be driven by the action of the driving roller (182'').

7. The image-forming machine of claim 6 in which a closed position-detecting means (197'') is provided which detects the positioning of the upper cover member (150'') at the closed position; and when the detecting member (198'') detects the closed position of the upper cover member (150''), the rotation of the driving roller (182'') is permitted, and when it does not detect the closed position of the upper cover member (150''), the driving roller (182'') is not rotated.

8. The image-forming machine of claim 7 in which the closed position-detecting means (197'') is provided with an actuating projecting piece (198'') provided in the upper cover member (150'') and a switch means (200'') disposed in the main body (2) of the machine; and when the upper cover member (150'') is held at the closed position, the switch means (200'') is maintained in the closed state by the action of the actuation projecting piece (198'') to permit energization of a clutch means (190'') annexed to the driving roller (182''), and when the upper cover member (150'') is held at the open position, the actuation projecting piece (198'') moves away upwardly to maintain the switch means (200'') in the open state and thus de-energize the clutch means (190'').

## Patentansprüche

1. Bilderzeugungsmaschine, die aufweist: einen Hauptkörper (2) mit einem Förderdurchgang (69), um ein Blattmaterial zu fördern, und mit einem Aufnahmeabschnitt (126), um ein Blattmaterial mit einem während des Förderns durch den Förderdurchgang (69) darauf erzeugten Bild aufzunehmen, und einen Sortierer (4) mit einer Vielzahl von Sammelbehältern (110), um Blätter zu sortieren und sie auf die Sammelbehälter (110) zu verteilen, wobei die Blätter aus dem Förderdurchgang (69) abgegeben und selektiv in den Sortierer (4) eingeführt werden, wobei ein Hilfsaufnahmeelement (134, 134') an dem Aufnahmeabschnitt (126) angebracht ist, um zwischen einer ersten Position und einer zweiten Position frei schwenkbar zu sein, und
wenn das Hilfsaufnahmeelement (134, 134') in der ersten Position ist, eine seiner Oberflächen als ein Hilfsaufnahmebereich wirkt, um die aus dem Förderdurchgang (69) abgegebenen Blätter aufzunehmen, und wenn das Hilfsaufnahmeelement in der zweiten Position ist, seine andere Oberfläche als eine untere Führungseinrichtung (148) wirkt, um die aus dem Förderdurchgang (69) abgegebenen Blätter zu dem Sortierer (4) zu leiten.

2. Bilderzeugungsmaschine nach Anspruch 1, wobei der Aufnahmeabschnitt (126) von einem Teil einer oberen Wand (128) des Hauptkörpers (2) definiert ist und sich schräg nach oben von einem Ende zu dem anderen Ende des Hauptkörpers (2) erstreckt; und das Hilfsaufnahmeelement (134, 134') in dem anderen Endbereich des Hauptkörpers (2) angeordnet ist, und wenn es in der ersten Position ist, an der Abstromseite des Aufnahmeabschnitts (126) positioniert ist und als ein Hilfsaufnahmebereich wirkt, um die aus dem Förderdurchgang (69) abgegebenen Blätter aufzunehmen, und wenn es in der zweiten Position ist, über dem Aufnahmeabschnitt (126) positioniert ist und als eine untere Führungseinrichtung wirkt, um die aus dem Förderdurchgang (69) abgegebenen Blätter zu dem Sortierer (4) zu leiten.

3. Bilderzeugungsmaschine nach Anspruch 1, wobei ein oberes Abdeckelement (150, 150', 150'') an dem Hauptkörper (2) angebracht ist, um zwischen einer Offenposition und einer Schließposition frei schwenkbar zu sein, und in der Offenposition den oberen Raum des Hauptkörpers (2) offenhält und das Positionieren des Hilfsaufnahmeelements (134, 134', 134'') in der ersten Position gestattet und in der Schließposition den oberen Raum des Hauptkörpers (2) abdeckt und als eine obere Führungseinrichtung wirkt, um die aus dem Förderdurchgang (69) abgegebenen Blätter zu dem Sortierer (4) zu leiten.

4. Bilderzeugungsmaschine nach Anspruch 3, wobei in der oberen Abdeckung (150, 150', 150'') ein Anschlagbereich (156) vorgesehen ist, der an einem Teil (160) des Hauptkörpers (2) anliegt, um eine Schwenkbewegung des oberen Abdeckelements (150, 150', 150'') über die Schließposition hinaus zu verhindern.

5. Bilderzeugungsmaschine nach Anspruch 3, wobei das Hilfsaufnahmeelement (134') über einen Verriegelungsmechanismus (170') mit dem oberen Abdeckelement (150') verbunden ist; und wenn das obere Abdeckelement (150') in die Offenposition gebracht ist, das Hilfsaufnahmeelement (134') durch die Wirkung des Verriegelungsmechanismus (170') in der ersten Position gehalten wird, und wenn das obere Abdeckelement (150') in die Schließposition gebracht ist, das Hilfsaufnahmeelement (134') durch die Wirkung des Verriegelungsmechanismus (170') in der zweiten Position gehalten wird.

6. Bilderzeugungsmaschine nach Anspruch 3, wobei ein Zuführrollenmechanismus (180'') zum Zuführen der aus dem Förderdurchgang (69) abgegebenen Blätter zu dem Sortierer (4) an dem anderen Endbereich des Hauptkörpers (2) angeordnet ist und der Zuführrollenmechanismus (180'') mit einer treibenden Rolle (182''), die an dem Hauptkörper (2) angebracht und ausgebildet ist, um in einer vorbestimmten Richtung zu drehen, und mit einer getriebenen Rolle (184'') versehen ist, die an dem oberen Abdeckelement (150'') drehbar angebracht und ausgebildet ist, um durch die Wirkung der treibenden Rolle (182'') getrieben zu werden.

7. Bilderzeugungsmaschine nach Anspruch 6, wobei eine Schließposition-Detektiereinrichtung (197'') vorgesehen ist, die die Positionierung des oberen Abdeckelements (150'') in der Schließposition detektiert; und wenn das Detektierelement (198'') die Schließposition des oberen Abdeckelements (150'') detektiert, die Drehung der treibenden Rolle (182'') gestattet wird, und wenn es die Schließposition des oberen Abdeckelements (150'') nicht detektiert, die treibende Rolle (182'') nicht gedreht wird.

8. Bilderzeugungsmaschine nach Anspruch 7, wobei die Schließposition-Detektiereinrichtung (197'') mit einem Betätigungsvorsprung (198''), der in dem oberen Abdeckelement (150'') vorgesehen ist, und mit einer Schaltereinrichtung (200'') versehen ist, die in dem Hauptkörper (2) der Maschine angeordnet ist; und wenn das obere Abdeckelement (150'') in der Schließposition gehalten ist, die Schaltereinrichtung (200'') durch die Wirkung des Betätigungsvorsprungs (198'') in dem Schließzustand gehalten wird, um ein Erregen einer Kupplungseinrichtung (190''), die an die treibende Rolle (182'') angeschlossen ist, zu gestatten, und wenn das obere Abdeckelement (150'') in der Offenposition gehalten ist, der Betätigungsvorsprung (198'') sich nach oben wegbewegt, um die Schaltereinrichtung (200'') in dem Offenzustand zu halten und die Kupplungseinrichtung (190'') dadurch abzuerregen.

## Revendications

1. Une machine de formation d'images comprenant un corps principal (2) ayant un passage de transport (69) pour transporter un matériau en feuille et une section réceptrice (126) pour recevoir un matériau en feuille ayant une image formée dessus pendant le transport à travers le passage de transport (69) et une trieuse (4) ayant une pluralité de bacs récepteurs (110) pour trier des matériaux en feuilles et les distribuer parmi les bacs récepteurs (110), lesdits matériaux en feuilles étant évacués du passage de transport (69) et introduits sélectivement dans la trieuse (4), dans laquelle un organe récepteur auxiliaire (134, 134') est monté sur la section réceptrice (126) de manière à être libre de pivoter entre une première position et une seconde position, et l'organe récepteur auxiliaire (134, 134'), lorsqu'il est dans la première position, l'une de ses surfaces agit en tant que portion réceptrice auxiliaire pour recevoir les matériaux en feuilles évacués du passage de transport (69) et, lorsqu'il est dans la seconde position, son autre surface agit en tant que moyen de guidage inférieur (148) pour conduire à la trieuse (4) les matériaux en feuilles évacués du passage de transport (69).

2. La machine de formation d'images de la figure 1, dans laquelle la section réceptrice (126) est définie par une partie d'une paroi supérieure (128) du corps principal (2) et s'étend inclinée vers le haut depuis une extrémité du corps principal (2) vers l'autre; et l'organe récepteur auxiliaire (134, 134') est disposé dans l'autre portion d'extrémité du corps principal (2) et, lorsqu'il est à la première position, il est positionné en aval de la portion réceptrice (126) et agit en tant qu'une portion réceptrice auxiliaire pour recevoir les matériaux en feuilles évacués du passage de transport (69) et, lorsqu'il est à la seconde position, il est positionné au-dessus de la section réceptrice (126) et agit en tant qu'un moyen de guidage inférieur pour conduire à la trieuse (4) les matériaux en feuilles évacués du passage de transport (69).

3. La machine de formation d'images de la revendication 1, dans laquelle un organe de couvercle supérieur (150, 150', 150'') est monté sur le corps principal (2) de manière à pivoter entre une position ouverte et une position fermée et, dans la position ouverte, maintient ouvert l'espace de dessus du corps principal (2) et permet le positionnement de l'organe récepteur auxiliaire (134, 134', 134'') à la première position et, à la position fermée, couvre l'espace de dessus du corps principal (2) et agit en tant que moyen de guidage supérieur pour conduire à la trieuse (4) les matériaux en feuilles évacués du passage de transport (69).

4. La machine de formation d'images de la revendication 3, dans laquelle le couvercle supérieur (150, 150', 150'') a, disposée dedans, une portion d'arrêt (156) qui bute sur une partie (160) du corps principal (2) pour empêcher le mouvement de pivotement de l'organe de couvercle supérieur (150, 150', 150'') au-delà de la position fermée.

5. La machine de formation d'images de la revendication 3, dans laquelle l'organe récepteur auxiliaire (134') est relié à l'organe de couvercle supérieur (150') par l'intermédiaire d'un mécanisme de verrouillage réciproque (170'); et, lorsque l'organe de couvercle supérieur (150') est amené à la position ouverte, l'organe récepteur auxiliaire (134') est maintenu à la première position par l'action du mécanisme de verrouillage réciproque (170') et quand l'organe de couvercle supérieur (150') est amené à la position fermée, l'organe récepteur auxiliaire (134') est maintenu à la seconde position par l'action du mécanisme de verrouillage réciproque (170').

6. La machine de formation d'images de la revendication 3, dans laquelle un mécanisme à rouleaux d'alimentation (180'') pour amener à la trieuse (4) les matériaux en feuilles évacués du passage de transport (69) est disposé à l'autre portion d'extrémité du corps principal (2) et le mécanisme à rouleaux d'alimentation (180'') est muni d'un rouleau d'entraînement (182'') monté sur le corps principal (2) et adapté pour tourner dans une direction déterminée et d'un rouleau suiveur (184'') monté à rotation sur l organe de couvercle supérieur (150'') et agencé pour être entraîné par l'action du rouleau d'entraînement (182'').

7. La machine de formation d'images de la revendication 6, dans laquelle est prévu un moyen de détection de la position fermée (197'') qui détecte le positionnement de l'organe de couvercle supérieur (150'') à la position fermée; et, lorsque l'organe de détection (198'') détecte la position ouverte de l'organe de couvercle supérieur (150''), la rotation du rouleau d'entraînement (182'') est permise et, quand il ne détecte pas la position fermée de l'organe de couvercle supérieur (150''), le rouleau d'entraînement (182'') n'est pas entraîné en rotation.

8. La machine de formation d'images de la revendication 7, dans laquelle le moyen de détection de la position fermée (197'') est muni d'une pièce saillante d'actionnement (198'') disposée dans l'organe de couvercle supérieur (150'') et d'un interrupteur (200'') disposé dans le corps principal (2) de la machine; et, quand l'organe de couvercle supérieur (150'') est maintenu à la position fermée, l'interrupteur (200'') est maintenu à l'état fermé par l'action de la pièce saillante d'actionnement (198'') pour permettre l'excitation d'un embrayage (190'') annexé au rouleau d'entraînement (182'') et, lorsque l'organe de couvercle supérieur (150'') est maintenu à la position ouverte, la pièce saillante d'actionnement (198'') s'écarte vers le haut pour maintenir l'interrupteur (200'') à l'état ouvert et cesser ainsi d'exciter l'embrayage (190'').
